Europäisches Patentamt

European Patent Office

Office européen des brevets

(11) Publication number: **0 450 729 A2**

## EUROPEAN PATENT APPLICATION

(21) Application number: 91200777.0

(51) Int. Cl.5: **C09J 103/02**

(22) Date of filing: **03.04.91**

(30) Priority: **04.04.90 NL 9000791**

(43) Date of publication of application:
09.10.91 Bulletin 91/41

(84) Designated Contracting States:
**BE CH DE ES FR GB IT LI NL**

(71) Applicant: **Coöperatieve Verkoop- en Productievereniging van Aardappelmeel en Derivaten 'AVEBE' B.A.**
**Beneden Oosterdiep 27**
**NL-9641 JA Veendam(NL)**

(72) Inventor: **Jansen, Johannes Jacobus**
**Westereems 20**
**NL-9642 KS Veendam(NL)**
Inventor: **Potze, Hendrik Jans**
**Pommerse Bocht 7**
**NL-9642 EA Veendam(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) **An adhesive for the manufacture of corrugated board, a dry mixture and combination of components suitable for the preparation of that adhesive as well as corrugated board adhered together with that adhesive.**

(57) There has been found an adhesive for the manufacture of corrugated board consisting of water, suspended ungelatinized starch granules and a carrier fraction. The adhesive is characterized in that the carrier fraction contains a combination of a gelatinized non-crosslinked starch product and a gelatinized crosslinked starch product.

EP 0 450 729 A2

This invention relates to an adhesive for the manufacture of corrugated board consisting of water in which ungelatinized starch is suspended and which also contains a carrier fraction.

U.S. patent 2,102,937 describes adhesives for corrugated board consisting of a suspension of ungelatinized starch granules in an aqueous solution of gelatinized starch. In the manufacture of corrugated board flat layers of paper are adhered to corrugated paper layers. For this purpose the starch suspension is applied to the ridges of the corrugated paper layer. Then the exterior flat paper layers are applied under pressure to the ridges provided with adhesive. By supplying heat from outside, the starch granules gelatinize while absorbing water so that the corrugated and the flat paper layers are adhered together.

The described adhesives for the manufacture of corrugated board also contain, in addition to the ungelatinized starch, a carrier fraction consisting of water-soluble polymers, such as alginates, carboxymethyl cellulose or starch products. Mostly, gelatinized or pregelatinized starch products are used as carrier. The carrier is contained in the aqueous adhesive for corrugated board in a dissolved state and gives the adhesive sufficient viscosity to keep the ungelatinized starch granules in homogeneous suspension. Thus it is avoided that when mixing and processing of the adhesive the starch granules separate or settle out in pans, vessels, conduits or pumps. It is a further function of the dissolved carrier fraction to give the adhesive the desired rheological properties so that the adhesive can be processed without problems.

In addition to the ungelatinized starch and the carrier fraction, the described adhesives for corrugated board often also contain one or more alkaline compounds and borax. Useful alkaline compounds are sodium hydroxide or potassium hydroxide. It is also quite possible to use combinations of alkaline compounds, such as calcium hydroxide and sodium carbonate. These alkaline compounds lower the gelatinization temperature of the ungelatinized starch granules and facilitate moistening of the paper layers so as to obtain more rapid adhesion. Borax increases the viscosity and the adhesive force of the adhesive during gelatinization on the ridges of the corrugated paper. If desired, preservatives, antifoaming agents and fillers, such as clay and bentonite, may be included in the adhesive.

U.S. patent 3,004,855 discloses an adhesive for corrugated board consisting of a suspension of ungelatinized starch in a previously prepared aqueous starch paste carrier, the starch of which has been reacted with a polyfunctional crosslinking reagent. The adhesive is said to possess a stabilized viscosity during its application.

Chemical Patents Index Documentation Abstracts Journal, Week 8847, January 25, 1989, AN 88-335927/47, discloses an adhesive composition for corrugated cardboard, comprising untreated starch granules and a carrier portion consisting of crosslinked alpha starch having a swelling degree of 10-80%.

Chemical Abstracts, Vol. 96, No. 22, May 1982, 183151z, discloses a powdered composition which, after dissolution, is especially suitable as an adhesive for corrugated cardboard. This composition comprises starch, a carboxymethyl starch phosphate and borax.

The carrier fraction in adhesives for the manufacture of corrugated board performs important functions and must satisfy different requirements. First of all, the dissolved carrier must ensure that the ungelatinized starch granules are homogeneously kept in suspension. Furthermore, the dissolved carrier fraction must contribute to the viscosity of the adhesive remaining relatively stable under different conditions, such as during standstill, storing in storage vessels, stirring and pumping. The carrier fraction further regulates the water retention of the adhesive, that is to say the adhesive applied to the ridges must retain the water to the desired extent, neither too long nor too short. Of paramount importance are also the rheological properties (the character) of the adhesive which are highly determined by the nature of the carrier fraction. The character of the adhesive may vary from short to long and the carrier has much influence thereon. The character of the adhesive co-determines the desired uniform distribution of the adhesive over the rolls applying the adhesive to the ridges. Furthermore, the character of the adhesive greatly influences the occurrence of undesirable effects, such as spattering and ropiness when processing and applying the adhesive. When using one specific starch product as carrier fraction, it is not always possible to meet all the above requirements and functions. The object of this invention is therefore to provide a carrier fraction which is in a better position to meet the requirements imposed.

This invention relates to adhesives for the manufacture of corrugated board consisting of water, suspended ungelatinized starch granules and a carrier fraction containing a combination of a gelatinized non-crosslinked starch product and a gelatinized crosslinked starch product.

The ungelatinized starch granules consist generally of native starches, such as potato starch, corn starch, wheat starch or tapioca starch. The gelatinized starch products to be used according to this invention can be obtained by gelatinization or pregelatinization of native or modified starches. The modified starches are made in a known manner by modification of native starches through partial depolymerization (dextrinization, oxidation or breakdown through acids or enzymes), monofunctional esterification and/or monofunctional etherification. This esterification or etherification can be carried out by reaction of starch

2

with monofunctional reagents, such as monochloroacetic acid, acetic anhydride, tripolyphosphates, orthophosphates, succinic anhydride, octenyl-succinic anhydride, urea, a combination of urea and phosphoric acid, propylene oxide, ethylene oxide, acrylonitrile or vinyl acetate.

The carrier fraction to be used according to this invention comprises two components. The first component consists of a non-crosslinked starch product obtained by gelatinization or pregelatinization of the native starches or the modified starches described above. The second component consists of a crosslinked starch product obtained by gelatinization or pregelatinization of native or modified starch products which before, during and/or after gelatinization have been treated with polyfunctional reagents, resulting in chemical crosslinking between the starch molecules. Crosslinking of starch can be accomplished by reaction with different polyfunctional reagents, such as phosphorus oxychloride, sodium trimetaphosphate, a combination of adipic anhydride and acetic anhydride, adipic anhydride and epichlorohydrin. The esterification, etherification and/or crosslinking of starch is extensively described in the book by O.B. Wurzburg (Ed.), Modified starches: properties and uses, CRC Press, Boca Raton, Florida, 1986.

The first non-crosslinked starch component gives with water colloidal solutions of long character. For the purpose of this invention the non-crosslinked starch products are also those starch products which are so slightly crosslinked that colloidal solutions of these starch products have maintained their long character. The second crosslinked starch component gives with water colloidal solutions of short character. A colloidal starch solution of short character (paste-like; unctuous character) abruptly breaks down when this solution is allowed to flow from a stirrer. A colloidal starch solution of long character (cohesive: "tacky"; flowing character), however, is drawn into long threads (ropiness) when this solution is allowed to flow from a stirrer. A starch solution of short character often contains discrete swollen starch granular structures which are practically absent in solutions of long character. By using the unique combination of non-crosslinked and crosslinked starch products as carrier fraction according to this invention, there are obtained adhesives for corrugated board which are flexibly applicable and are excellently processable on the corrugated board machine under various conditions of manufacture. The resulting adhesives possess improved properties with respect to their flow behaviour, water retention and adhesive force. This is particularly the case when using adhesives having a relatively high solids content. The selection of the carrier fraction is important with adhesives of higher concentration (e.g. having a solids content of more than about 22 wt.%) because despite the relatively lower aqueous content there must be obtained a good gelatinization of the ungelatinized starch granules.

Preferably, the adhesive contains 2 to 15 wt.% (based on the total solids of the adhesive) non-crosslinked starch product and 2 to 15 wt.% (ditto) crosslinked starch product. If desired, the dry components of the adhesive can be premixed by the starch manufacturer to form a so-called "one-bag-mix". It is then only necessary in the corrugated board factory to mix the dry mixture with water to obtain an adhesive for corrugated board. It is also possible, however, to process in the corrugated board factory the individual components together with water to obtain an adhesive for corrugated board. Preferably, the adhesive also contains alkaline compounds, such as sodium hydroxide. In certain cases, particularly when using the "one-bag-mix", it is desirable to use a combination of calcium hydroxide and sodium carbonate as alkali. Furthermore, the mixture preferably also contains 0.5 to 5 wt.% borax (based on the total solids of the adhesive).

The invention will be illustrated by the following examples.

## Example I

Three adhesives were prepared using the following starch products as carrier fraction:

Starch product A — was made by gelatinizing potato starch in an aqueous alkaline solution and drum-drying and grinding the resulting mixture.

Starch product B — was made by crosslinking corn starch in an aqueous alkaline medium with 0.1 wt.% (based on the dry starch) epichlorohydrin and etherifying with monochloroacetic acid, thereby obtaining a DS (Degree of Substitution) of 0.35 of carboxymethyl groups introduced. The reaction mixture was drum-dried and ground.

Starch product A + B : a combination of starch product A and starch product B to be used according

3

to the invention.

For the manufacture of corrugated board three adhesives were made having the following composition (the proportions are mentioned in parts by weight). The Stein-Hall viscosity was measured in a standard Stein-Hall beaker conventional for this industry.

| Components | Composition 1 | Composition 2 | Composition 3 |
|---|---|---|---|
| Water | 275 | 275 | 275 |
| Starch product A | 14 | - | 5 |
| Starch product B | - | 6 | 5 |
| Borax | 3 | 3 | 3 |
| NaOH | 1 | 1 | 1 |
| Potato starch | 82 | 90 | 84 |
| pH | 11.5 | 11 | 11.5 |
| Stein-Hall viscosity | 60 | 60 | 60 |
| Solids content (wt.%) | 27 | 27 | 27 |

Evaluation of adhesives

Composition 1 with starch product A gives an adhesive a long character. The carrying capacity of the carrier fraction of this adhesive is too low, which soon results in phase separation in the adhesive. The viscosity of the adhesive decreases under the influence of stirring. The flow behaviour and the water retention are good. Owing to the long character of starch product A, composition 1 may show an undesirable ropy behaviour.

Composition 2 with starch product B gives a stable adhesive of short character. The carrying capacity of the carrier fraction of this adhesive is high so that the adhesive remains homogeneous. The viscosity of the adhesive is practically stable under the influence of stirring. Owing to the short character, however, the processability and the water retention are still open to criticism. Because of the short character of starch product B, composition 2 shows a tendency to spattering under certain processing conditions.

Composition 3, using a combination of starch product A and starch product B as carrier fraction, gives an adhesive which largely satisfies all the requirements imposed with respect to carrying capacity, stirring stability, processability, water retention and adhesive properties. The good properties of both components A and B are expressed in composition 3. Composition 3 therefore has good processing properties due to inhibition of undesirable effects, such as ropiness and spattering.

**Example II**

In the manner as described in Example I, an adhesive for corrugated board was made according to composition 3, but instead of starch product A starch product C was used and instead of starch product B starch product D.

Starch product C was made by etherifying potato starch in an aqueous alkaline solution with propylene oxide to obtain an MS (Molar Substitution) of 0.32. The reaction mixture was drum-dried and ground.

Starch product D was made by crosslinking potato starch in an aqueous alkaline solution with 0.1 wt.% (based on the dry starch) epichlorohydrin, etherifying with propylene oxide to obtain an MS of 0.26 and etherifying with monochloroacetic acid to obtain a DS of 0.125. The reaction mixture was drum-dried and

4

ground.

When using the combination of starch product C and starch product D the same favourable results were obtained as in Example I for composition 3.

## Claims

1. An adhesive for the manufacture of corrugated board consisting of water, suspended ungelatinized starch granules and a carrier fraction, characterized in that the carrier fraction contains a combination of a gelatinized non-crosslinked starch product and a gelatinized crosslinked starch product.

2. An adhesive according to claim 1, characterized in that the gelatinized non-crosslinked starch product and the gelatinized crosslinked starch product are both present in a proportion of 2-15 wt.%, based on the total solids of the adhesive.

3. An adhesive according to claim 1 or 2, characterized in that the adhesive contains 0.5-5 wt.% borax, based on the total solids of the adhesive.

4. An adhesive according to claim 1-3, characterized in that the adhesive also contains at least an alkaline compound.

5. An adhesive according to claim 1-4, characterized in that the total solids content of the adhesive is more than 22 wt.%.

6. A dry mixture suitable for being mixed with water to obtain an adhesive, characterized in that the mixture is composed of the solid components defined in claims 1-5, which are present in the proportions indicated therein.

7. A combination of a gelatinized non-crosslinked starch product and a gelatinized crosslinked starch product, suitable for preparing an adhesive according to claims 1-5.

8. A corrugated board adhered together by means of an adhesive according to claims 1-5.